# EUROPEAN PATENT APPLICATION

(11) **EP 2 328 149 A1**
(43) Date of publication of application: **01.06.2011**
(21) Application number: 09177216.0
(22) Date of filing: 26.11.2009
(51) Int. Cl.: G11B 7/26

(54) **Method and arrangement to create a surface layer on a disc.**

(71) Applicant: Pheenix Alpha AB, 171 29 Solna (SE)
(72) Inventor: Lagerstedt, Torgny, 113 52, Stockholm (SE)
(74) Representative: Platt, Timothy Nathaniel

(57) **Abstract**

Process and device for creating a thin, transparent covering layer on an information surface of an optically readable disc (10), in particular a covering layer on a so-called blu-ray disc. During the spinning out of a layer of covering layer material of predetermined thickness over the information surface of the disc (10), a gas flow is directed radially inwards over the surface of the covering layer to even out the thickness of the covering layer.

## Description

### THE BACKGROUND OF THE INVENTION

The present invention relates to a process for creating a surface layer of uniform thickness on an information surface of an optically readable disc, particularly a cover layer on a so-called blu-ray disc, according to the preamble of claim 1.

Discs of blu-ray type have very strict requirements as to even thickness of the covering layer, which is to protect the information side of the disc. The thickness of the covering layer on blu-ray disc should typically be 75 µm or alternatively 100 µm with a typical maximum deviation of ± 3 µm to enable the small indentations on an information side of the disc to be able to be read correctly by the reader device in the disc player in question. When applying a covering layer on blu-ray discs, normally a so-called spin coating process is used where a cover layer is spun out on the information side of the disc from a central portion of the disc as it rapidly rotates.

A specific problem which arises when spinning out the covering layer on discs of the typ of question with several holes, where the covering layer is dispensed onto the disc somewhat from the center of the disc is that the covering layer formed causes the center to be thinner than at greater radius, which makes it difficult to maintain the desired thickness tolerance over the entire covering layer. This thinning is caused by the fact that the initial dispensing of the covering layer occurs at a radius lying somewhat away from the center.

One method of partially avoiding this problem is, during dispensing and spinning out of the covering layer material, to use a cover plate over the center hole of the disc and to apply the covering layer material on the center of the cover plate, but this creates some other problems with the handling and cleaning of the cover plate. Furthermore methods of selectively curing the covering layer during the spinning process with UV light with the controlled intensity profile can provide a more even layer thickness. This method is however complex and involves problems with partial curing of excess material. A further method of trying to control the thickness of the layer is to control locally the viscosity of the cover layer material with IR light, for example, during the spinning process. This is also a complex matter. Another method of assuring even thickness of the transparent cover layer is to apply a sheet of a predetermined thickness on the information surface, which is also technically complicated and expensive.

### SUMMARY OF THE INVENTION

It is a primary purpose of the present invention to suggest an improved and simplified process for creating a surface layer of uniform thickness on an information surface of an optically readable disc, specially a covering layer on a so-called blu-ray disc. For this purpose the process according to the invention is characterized by the features disclosed in claim 1, where a gas flow is directed radially inwards over the surface of the covering layer as the disc is rotated to even out a successive covering layer thickening which is formed from the center area of the disc and outwards towards the outer periphery during spinning out of the covering layer material.

This radially inwardly directed gas flow over the covering layer can be achieved in a number of manners, as is disclosed in the patent claims dependent on claim 1.

The invention also relates to a device according to independent claim 8 for carrying out the process.

Specific features of the device are disclosed in the claims dependent on claim 8.

The invention will be described in more detail below with reference to the accompanying drawings.

### SHORT DESCRIPTION OF THE DRAWINGS

Figures 1 a and b show schematically in cross section an annular application of a covering layer material near the edge of a central hole of an optically readable disc and how the thickness of the covering layer successively increases from the center outwards along the radius of the disc after spinning out of a covering layer;
Figure 2 shows schematically a side view of a first embodiment of a device for creating a covering layer with uniform thickness on a blu-ray disc;
Figure 3 shows schematically a side view of a second embodiment of a device for creating a covering layer of uniform thickness on a blu-ray disc; and
Figure 4 shows schematically a side view of a third embodiment of a device for creating a covering layer of uniform thickness on a blu-ray disc.

### DETAILED DESCRIPTION OF THE PREFERRED EMBODIMENTS

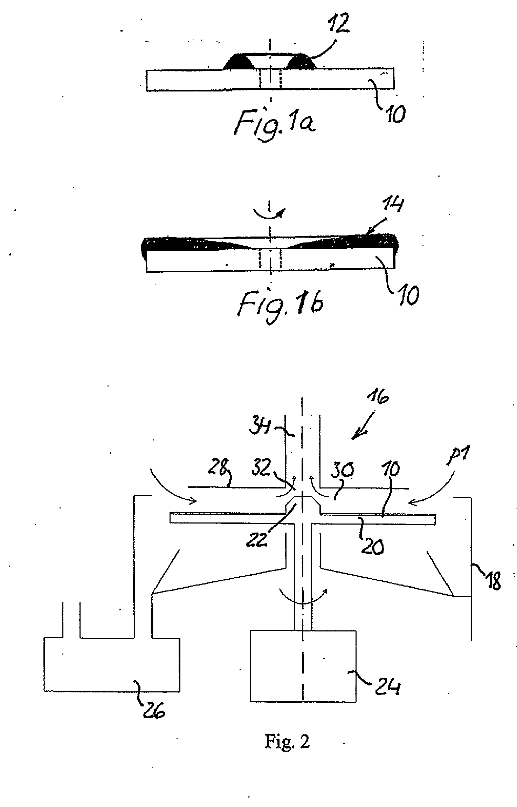

Figure 1a shows schematically an optical disc 10 provided with a hole. During slow rotation of the disc, close to the hole, a ring of transparent covering layer material 12 has been applied, which is to be spun out at high rotational speed to a covering layer 14 over the information side of the disc 10, as is shown in Figure 1b. Due to the annular, initial dispensing of the covering layer material, the thickness of the covering layer 14 will, during the spin coating, normally increase gradually with increasing radius from the center of the disc 10, thereby making it difficult to create, a layer thickness of typically 75 µm or alternatively 100 µm and keep it within the typical thickness tolerance of ± 3 µm which applies to blu-ray discs.

Figure 2 shows schematically a first embodiment of a device 16 according to the invention for achieving a covering layer of uniform thickness over an optical disc 10. The device 16 comprises a housing 18, in which there is a rotatably mounted disc holder in the form of a chuck 20 with a spindle 22 on which the holed disc 10 is placed. The chuck 20 can be rotated at a low rotational speed of a few revolutions per minute by means of a drive unit 24, normally an electric motor, as the covering layer material is applied close to the central hole of the disc 10 (not shown), followed by a sequence at high RPM, where the rotational speed can vary as the covering layer material is spun out over the information side of the disc 10 to form a covering layer thereon.

Beneath the chuck 20 there is a collection trough 26 for collecting excess material during the spin out process. In order to even out the uneven layer thickness created during the spinning out, the device 16 is provided according to Figure 1b, with a flow cover plate 28, which is placed at a suitable distance above the disc 10 on the chuck 20 to form a space 30, the cover plate 28 having a central hole, which is connected to a channel 34 in which an underpressure can be generated with the aid of a fan for example (not shown). During the entire or part of the spin-out process performed with a specific spin profile, where the rotational speed and spin times are varied, the channel 34 is subjected to an underpressure, so that a radially inwardly directed air flow towards the center of the disc 10 is generated in the space 30, as indicated by the arrow p1. This radially inwardly directed air flow creates shear forces on the cover layer surface, so that the cover layer will now be thicker closer to the center to compensate for the too thin thickness of the cover layer during spinning out. The shear forces and thus the cover layer thickness can be simply controlled by the air flow. The flow cover plate 28 and/or the chuck 20 can be axially adjustable to regulate the distance between the disc 10 and the cover plate 28 and thus the height of the space 30. The flow cover plate 28 can also have outer and inner diameters which are adapted to each specific spin profile.

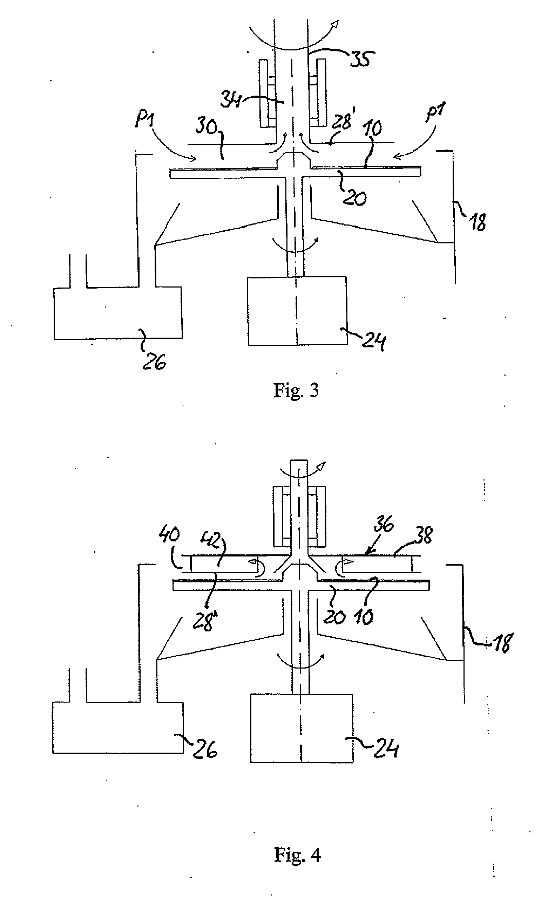

In the embodiment according to Figure 2, the flow cover plate 28 is stationary during the evening-out of the thickness of the cover layer. In an alternative embodiment according to Figure 3, the flow cover plate 28' can be rotatable, and during the cover layer evening phase, it is preferably rotated in the same rotational direction and at the same rotational speed as the chuck 20. If the cover plate and disc are rotated together, there will be a radially inwardly directed flow between them in thin so-called Ekman layers (not shown in Figure 3), which provides high shear stresses despite the low air flow, and which imparts high inwardly directed shear forces on the covering layer at low air flows. This means that the cover plate 28' can be kept at a relatively large distance from the covering layer but still provide the high shear stresses thereon. The outlet channel 34 is formed in this case by a shaft 35 which supports the flow cover plate 28'.

In an additional embodiment device according to invention shown in Figure 4, the inwardly directed air flow is created between the disc 10 and the flow cover plate 28" by a rotatable fan element 36 which is made up of the flow cover plate 28" and blades 42, which are disposed between the flow cover plate 28" and the disc 38. The fan element 36 creates, as it rotates, an underpressure which drives a radially inwardly directed flow between the disc 10 and the flow cover plate 28", thus providing the desired inwardly directed shear forces for evening-out the thickness of the covering layer. The diameters of the flow cover plate 28" and the blades 42 are adapted so that at a certain rotational speed of the fan element 36, a suitable air flow for evening-out the thickness of the cover layer 14 is obtained.

## Claims

1. Process for creating a surface layer of uniform thickness on an information surface of an optically readable disc (10), especially a covering layer on a so-called blu-ray disc, comprising the steps of:
- applying a disc (10) with the information surface upwards onto a horizontal, rotatable holder (20),
- applying a covering layer material close to a central hole of the disc (10) in a predetermined amount during slow rotation of the disc (10),
- causing the disc (10) to rotate during a spin sequence, where the rotational speed can vary, to spin out the covering layer material to a layer of predetermined thickness over the information surface of the disc, whereafter the disc (10) is slowed down, **characterized in that** during the entire or part of the spin sequence of the disc (10) a gas flow is directed radially inwards over the surface of the covering layer to even out a successive covering layer thickening, which is formed from the central area of the disc and out towards the outer periphery of the disc during the spinning out of the covering layer material during the spin sequence.

2. Process according to claim 1, **characterized in that** the radially inwardly directed gas flow over the covering layer is led through a first channel (30), formed between the covering layer and a flow cover plate (28; 28'; 28") lying thereabove.

3. Process according to claim 2, c**haracterized in that** the flow cover plate (28'; 28") is rotated in the same direction as the disc (10) during the evening-out of the thickness of the cover layer.

4. Process according to claim 3, **characterized in that** the flow cover plate (28', 28") is rotated at essentially the same rotational speed as the disc (10).

5. Process according to one of claims 1-4, **characterized in that** the gas flow is led away from the center area of the disc (10) via a central outlet hole (32) in the flow cover plate (28; 28').

6. Process according to claims 3 or 4, **characterized in that** the gas flow is led away from the center area of the disc (10) via a central outlet hole of a lower disc element forming a flow cover plate (28"), of a fan wheel (36) and via a second channel (40), which is limited by an upper disc element (38) of the fan wheel (36).

7. Process according to one of claims 1-6, **characterized in that** the gas is air.

8. Device for creating an even covering layer on an information surface of an optically readable disc (10), in particular a covering layer on a so-called blu-ray disc, comprising a housing (18), in which there is a rotatably mounted holder (20) for horizontal support of the disc (10), **characterized in that** a flow cover plate (28; 28'; 28") is arranged, with a covering layer applied and spun out on the disc (10), to delimit a first gas flow channel (30), the flow cover plate (28; 28'; 28") having a central outlet hole (32) which is connected to a second channel (34; 40) which is arranged to be subjected to an underpressure to generate a radially inwardly directed gas flow over the cover layer.

9. Device according to claim 8, **characterized in that** the second channel (34) is formed by a cavity in a hollow shaft (35) which supports the flow cover plate (28').

10. Device according to claim 9, **characterized in that** the flow cover plate (28') is rotatable with its shaft (35).

11. Device according to one of claims 8-10, **characterized in that** the distance between the flow cover plate (28; 28'; 28") and the holder (20) is adjustable.

12. Device according to claim 9 or 10, **characterized in that** the flow cover plate (28") is formed by a lower disc element of a fan wheel (36), which, together with an upper disc element (38) forms the second channel (40), with blades (42) being arranged between the lower and the upper disc elements (28", 38).
